# FASCICULE DE BREVET EUROPEEN

(11) **EP 3 204 241 B1**
(45) Date de publication et mention de la délivrance du brevet: **12.09.2018**
(21) Numéro de dépôt: 15775697.4
(22) Date de dépôt: 07.10.2015
(51) Int. Cl.: B60C 11/03

(54) **BANDE DE ROULEMENT POUR PNEUMATIQUE D'AVION**
GÜRTELLAGE FÜR EINEN FLUGZEUGREIFEN
TREAD LAYER FOR AN AIRCRAFT TYRE

(30) Priorité: 09.10.2014 FR 1459664
(43) Date de publication de la demande: 16.08.2017
(73) Titulaire: Compagnie Générale des Etablissements Michelin, 63000 Clermont-Ferrand (FR)
(72) Inventeur: FRANCOIS, Olivier, F-63040 Clermont-Ferrand Cedex 9 (FR); CANZI, Antoine, F-63040 Clermont-Ferrand Cedex 9 (FR)
(74) Mandataire: Millanvois, Patrick Jacques Jean
(86) Numéro de dépôt international: PCT/EP2015/073101
(87) Numéro de publication internationale: WO 2016/055504

(56) Documents cités:
- WO-A1-2013/092578
- WO-A1-2013/092585

## Description

La présente invention concerne un pneumatique pour avion, et, en particulier, la bande de roulement d'un pneumatique pour avion.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Les expressions « radialement », « axialement » et « circonférentiellement » signifient respectivement « selon la direction radiale », « selon la direction axiale » et « selon la direction circonférentielle ».

De façon générale, un pneumatique comprend un sommet comprenant une bande roulement destinée à venir en contact avec le sol par l'intermédiaire d'une surface de roulement, ledit sommet étant relié par deux flancs à deux bourrelets destinés à venir en contact avec une jante.

La bande de roulement est destinée à venir en contact avec un sol par l'intermédiaire d'une surface de roulement selon une aire de contact de longueur circonférentielle L_{C} et de largeur axiale L_{A}, qui est fonction des sollicitations mécaniques de charge et de pression appliquées au pneumatique. Dans le cas d'un pneumatique pour avion, il est usuel de définir l'aire de contact lorsque le pneumatique à l'état neuf est gonflé à sa pression nominale recommandée et est soumis à une flèche radiale égale à 32%. Par définition, la longueur circonférentielle L_{C} et la largeur axiale L_{A} de l'aire de contact sont respectivement la longueur circonférentielle et la largeur axiale du rectangle dans lequel est inscrite l'aire de contact de forme plus ou moins elliptique. L'aire de contact est l'empreinte au sol du pneumatique lorsque le pneumatique à l'état neuf est soumis à une flèche radiale égale à 32%, sous l'action combinée de la charge verticale et de la pression de gonflage. Par définition, la flèche radiale d'un pneumatique est sa déformation radiale, ou variation relative de hauteur radiale, lorsque celui-ci passe d'un état gonflé non chargé à un état gonflé chargé en statique. Elle est définie par le rapport de la variation de la hauteur radiale du pneumatique sur la moitié de la différence entre le diamètre extérieur du pneumatique et le diamètre maximum de la jante mesuré sur le crochet de jante. Le diamètre extérieur du pneumatique est mesuré en statique dans un état non chargé gonflé à la pression nominale telle que recommandée, par exemple, par la Tire and Rim Association ou TRA.

La bande de roulement est un volume torique s'étendant radialement depuis une surface de fond jusqu'à la surface de roulement sur une hauteur radiale H, s'étendant axialement depuis un premier bord jusqu'à un deuxième bord de bande de roulement, et s'étendant circonférentiellement sur toute la périphérie du pneumatique ayant une longueur circonférentielle C. La bande de roulement en matériau élastomérique est la portion usante du pneumatique. La surface de fond est une surface théorique délimitant la hauteur d'usure maximale autorisée. Lorsque le niveau d'usure atteint cette surface de fond, il est recommandé de retirer le pneumatique.

La bande de roulement est généralement constituée d'éléments en relief s'étendant radialement vers l'extérieur à partir de la surface de fond, lesdits éléments en relief étant séparés des creux. Dans le cas d'un pneumatique d'avion, les éléments en relief sont le plus souvent des nervures circonférentielles séparées par des creux circonférentiels, appelés sillons circonférentiels. Une nervure circonférentielle s'étend radialement entre la surface de fond et la surface de roulement, sur une distance radiale appelée hauteur radiale. Elle s'étend axialement entre deux faces latérales, sur une distance axiale appelée largeur axiale, la largeur axiale étant mesurée au niveau de la surface de roulement. Enfin, elle s'étend circonférentiellement et continûment sur toute la périphérie du pneumatique. A titre d'exemple, une bande de roulement d'un pneumatique d'avion peut comprendre, symétriquement par rapport au plan équatorial, passant par le milieu de la bande de roulement et perpendiculaire à l'axe de rotation, deux nervures circonférentielles axialement extérieures ou nervures d'épaule, axialement limitées à l'extérieur par l'un des deux bords de la bande de roulement et à l'intérieur par un sillon circonférentiel, deux nervures circonférentielles intermédiaires, et, au centre de la bande de roulement, une nervure circonférentielle centrale. Une nervure circonférentielle centrale ou intermédiaire s'étend axialement depuis un premier sillon circonférentiel jusqu'à un deuxième sillon circonférentiel, alors qu'une nervure circonférentielle axialement extérieure ou d'épaule s'étend axialement depuis un bord de la bande de roulement jusqu'à un sillon circonférentiel. Ainsi une bande de roulement comprend au moins deux nervures d'épaule, chacune s'étendant axialement depuis un bord de bande de roulement jusqu'à un sillon circonférentiel sur une largeur axiale L_{S}.

Radialement à l'intérieur de la bande de roulement, est positionnée l'armature de sommet qui est la structure de renforcement du sommet du pneumatique. L'armature de sommet d'un pneumatique pour avion comprend généralement au moins une couche d'armature de sommet, dite couche de sommet. Chaque couche de sommet est constituée d'éléments de renforcement enrobés dans un matériau élastomérique, c'est-à-dire à base de caoutchouc naturel ou synthétique, lesdits éléments de renforcement parallèles entre eux formant, avec la direction circonférentielle, un angle compris entre +20° et -20°. Dans un pneumatique d'avion, les éléments de renforcement d'une couche de sommet sont généralement disposés circonférentiellement selon une courbe ondulée.

Parmi les couches de sommet, on distingue les couches de travail constituant l'armature de travail, comprenant le plus souvent des éléments de renforcement textiles, et les couches de protection constituant l'armature de protection, comprenant le plus souvent des éléments de renforcement métalliques ou textiles, et disposées radialement à l'extérieur de l'armature de travail. Les couches de travail conditionnent le comportement mécanique du sommet. Les éléments de renforcement des couches de travail sont le plus souvent des câbles constitués de filés de filaments textiles, préférentiellement en polyamides aliphatiques ou en polyamides aromatiques. Les couches de protection protègent essentiellement les couches de travail des agressions susceptibles de se propager à travers la bande de roulement radialement vers l'intérieur du pneumatique. Les éléments de renforcement des couches de protection peuvent être soit des câbles constitués de fils métalliques, soit des câbles constitués de filés de filaments textiles.

Les constructeurs d'avions ont comme préoccupation constante la sécurité des passagers et, par conséquent, la diminution des risques de défaillance de leurs appareils. Parmi les modes de défaillance potentiels, la perte partielle ou totale de la bande roulement d'un pneumatique, équipant le train d'atterrissage d'un avion, est un mode de défaillance critique, au cours des phases de décollage ou d'atterrissage de l'avion.

Ce mode de défaillance se produit, en particulier, lorsque le pneumatique roule sur un objet contondant, présent de façon aléatoire sur la piste. Compte tenu des conditions d'usage sévères d'un pneumatique d'avion, caractérisées par une pression de gonflage, une charge statique, une charge dynamique et une vitesse élevées, le passage de la bande de roulement du pneumatique sur l'objet contondant entraîne un endommagement de la bande de roulement qui aboutit généralement au découpage de la bande de roulement puis à la projection de morceaux de bande de roulement de dimensions géométriques et de masses plus ou moins élevées.

Les morceaux de bande de roulement peuvent alors soit percuter les structures de l'avion et entraîner des dommages structurels importants, du fait de l'énergie mécanique emmagasinée par lesdits morceaux, cette énergie mécanique étant d'autant plus importante que la masse et la vitesse de projection du morceau sont élevées, soit pénétrer dans les moteurs de l'avion et entraîner des problèmes de fonctionnement desdits moteurs, si ceux-ci ne peuvent pas absorber les morceaux de bande roulement en raison de leurs dimensions trop importantes.

Il a été envisagé de renforcer les structures de l'avion pour résister aux impacts potentiels et, en particulier, ceux des morceaux de bande de roulement. Mais, à iso-matériaux, cette solution implique une augmentation de la masse de la structure, pénalisante pour la performance de l'avion, d'où l'utilisation de matériaux structurels de plus en plus légers. Le renforcement mécanique de la structure ne règle toutefois pas le problème de projections dans les moteurs.

Des dispositifs de protection vis-à-vis de la projection de morceaux de bande de roulement ont été également envisagés. Le document WO 2010012913 décrit un panneau de protection, dont la surface externe comporte un matériau composite, monté, par l'intermédiaire de pièces déformables, sur un support lié à la structure de l'avion. Les pièces déformables, fixées sur plusieurs pièces de rigidification du support et perpendiculaires à la surface externe du panneau de protection, sont adaptées à flamber sous l'effet des impacts des morceaux de bande de roulement projetés. Le document WO 2010052447 décrit un dispositif protégeant les moteurs d'un avion de la projection de débris de bande de roulement de pneumatique. Ce dispositif comprend une barre de protection connectée de manière pivotante au train d'atterrissage principal de l'avion, la barre de protection étant mobile entre une première et une seconde positions. Dans la première position, la barre de protection s'étend latéralement en travers de l'ensemble monté, constitué du pneumatique et d'une roue, pour intercepter les trajectoires possibles des débris de bande de roulement.

Des dispositifs de fractionnement de la bande roulement, en vue de minimiser la taille des morceaux de bande de roulement et donc de minimiser les impacts sur l'avion, ont également été décrits. Le document US 7669798 décrit des moyens de fractionnement, situés entre la roue et une autre partie de l'avion, aptes à fragmenter en plusieurs morceaux la partie de la bande de roulement qui se détache du pneumatique et est projetée vers l'autre partie de l'avion. Ces moyens de fractionnement, tels qu'une grille avec des lames aptes à sectionner le matériau de la bande de roulement, sont agencés pour disperser lesdits morceaux.

Les dispositifs de protection ou de fractionnement précédemment décrits présentent l'inconvénient de constituer des structures additionnelles, dont les masses supplémentaires sont pénalisantes vis-à-vis de la charge utile de l'avion.

Des dispositifs de fractionnement de la bande roulement, intégrés au pneumatique, ont également été proposés. Le document WO 2013092578, sur lequel est basé le préambule de la revendication 1, décrit un pneumatique d'avion comprenant une couche de déchapage radialement intérieure à la bande de roulement et radialement extérieure à l'armature de sommet. Le document WO 2013092581 décrit un pneumatique d'avion dont la bande de roulement comprend des alignements de cavités débouchant sur la surface de roulement, parallèles entre eux, inclinés par rapport à la direction circonférentielle du pneumatique selon un angle au moins égal à 45° et répartis circonférentiellement sur au moins une partie de la périphérie du pneumatique. Le document WO 2013092585 décrit un pneumatique d'avion dont la bande de roulement comprend des cavités indépendantes, réparties axialement, sur au moins une partie de la largeur axiale de la surface de roulement, et réparties circonférentiellement, sur au moins une partie de la périphérie du pneumatique.

Lorsque la bande de roulement est agressée par un objet contondant, plus particulièrement au niveau d'une nervure d'épaule, le déchapage accidentel du pneumatique se limite à cette nervure d'épaule. Dans ce cas, la nervure d'épaule est souvent découpée sous la forme d'une bandelette dont une partie reste solidaire du pneumatique et dont la partie libre est susceptible de frapper la structure de l'avion à chaque tour de roue.

La présente invention a pour objectif de garantir le découpage d'une nervure d'épaule de pneumatique pour avion, soumise à un déchapage accidentel résultant de la propagation d'une fissure initiée par une agression extérieure, sous la forme de morceaux de bande de roulement dont la taille et la masse ne vont endommager ni la structure ni les moteurs de l'avion. Elle vise à proposer un dispositif intégré au pneumatique et non un dispositif additionnel extérieur au pneumatique pénalisant vis-à-vis de la charge utile de l'avion.

Cet objectif a été atteint, selon l'invention, par un pneumatique pour avion comprenant :
- une bande de roulement, destinée à venir en contact avec un sol par l'intermédiaire d'une surface de roulement selon une aire de contact de longueur circonférentielle L_{C} et de largeur axiale L_{A}, lorsque le pneumatique gonflé à sa pression nominale recommandée est soumis à une flèche radiale égale à 32%,
- la bande de roulement s'étendant radialement depuis une surface de fond jusqu'à la surface de roulement sur une hauteur radiale H, s'étendant axialement depuis un premier bord jusqu'à un deuxième bord de bande de roulement, et s'étendant circonférentiellement sur toute la périphérie du pneumatique,
- la bande de roulement comprenant deux nervures circonférentielles axialement extérieures dites nervures d'épaule, chacune s'étendant axialement depuis un bord de bande de roulement jusqu'à un sillon circonférentiel sur une largeur axiale L_{S},
- chaque nervure d'épaule comprenant des cavités débouchant sur la surface de roulement en formant une surface débouchante inscrite dans un cercle de diamètre D,
- les cavités de chaque nervure d'épaule étant réparties circonférentiellement selon un pas circonférentiel P,
- les cavités de chaque nervure d'épaule étant positionnées circonférentiellement selon une courbe périodique ayant une période T et une amplitude A,
- le pas circonférentiel P entre deux cavités consécutives étant au plus égal à 0.2 fois la période T de la courbe périodique,
- la période T de la courbe périodique étant au plus égale à la longueur circonférentielle L_{C} de l'aire de contact
- et l'amplitude A de la courbe périodique étant au moins égale à 0.5 fois la largeur axiale L_{S} de la nervure d'épaule.

Selon l'invention, chaque nervure d'épaule comprend des cavités débouchant sur la surface de roulement en formant une surface débouchante inscrite dans un cercle de diamètre D. En d'autres termes, la surface débouchante n'est pas obligatoirement circulaire, mais doit s'inscrire dans un cercle de diamètre D. Ces cavités forment ainsi des trous ou des puits dans chacune des deux nervures d'épaule, c'est-à-dire dans le mélange élastomérique constitutif de la nervure d'épaule.

Une cavité, au sens de l'invention, n'est pas une lamelle, telle qu'utilisée, par exemple, sur les bords des nervures circonférentielles d'un pneumatique pour poids lourd en vue de lutter contre l'usure irrégulière, ces lamelles ayant généralement un petit pas circonférentiel de l'ordre de quelques millimètres. Une cavité, au sens de l'invention, n'est pas non plus un entaillement transversal de la bande de roulement visant à améliorer la motricité d'un pneumatique pour essieu moteur d'un véhicule poids lourd ou à améliorer l'engrènement de la bande de roulement avec un sol de type chantier ou de type champ, pour un pneumatique pour véhicule de génie civil ou véhicule agricole. Une cavité, au sens de l'invention, est une zone d'affaiblissement local de la bande de roulement facilitant une découpe de la bande de roulement au niveau de cette cavité.

Pour une nervure d'épaule donnée, les cavités sont, d'une part, réparties circonférentiellement selon un pas circonférentiel P, préférentiellement mais pas obligatoirement constant, et, d'autre part, positionnées circonférentiellement selon une courbe périodique ayant une période T et une amplitude A. Pour résoudre le problème technique visé, à savoir contribuer à la diminution des dimensions et donc la masse des morceaux de bande de roulement, en cas de déchapage accidentel du pneumatique, les caractéristiques géométriques P, T et A doivent vérifier un certain nombre de conditions. Tout d'abord, le pas circonférentiel P entre deux cavités consécutives doit être au plus égal à 0.2 fois la période T de la courbe périodique. Ensuite, la période T de la courbe périodique doit être au plus égale à la longueur circonférentielle L_{C} de l'aire de contact. Enfin l'amplitude A de la courbe périodique doit être au moins égale à 0.6 fois la largeur axiale L_{S} de la nervure d'épaule.

Les inventeurs ont observé que tout point d'une nervure d'épaule décrit une période de trajectoire curviligne au passage dans l'aire de contact, en raison de la mise en plat à la fois axiale et circonférentielle de la nervure d'épaule. Par conséquent, toute fissure initiée dans une nervure d'épaule, par exemple suite au passage du pneumatique sur un objet contondant, va avoir tendance à se propager naturellement selon une telle trajectoire périodique. Les cavités selon l'invention sont ainsi distribuées sur une telle trajectoire périodique, à un pas donné, pour favoriser la fissuration naturelle en cas d'endommagement de la nervure d'épaule.

Un pas circonférentiel P entre deux cavités consécutives, au plus égal à 0.2 fois la période T de la courbe périodique, permet la propagation d'une fissure initiée par un endommagement entre deux cavités consécutives, sans initier de fissuration spontanée. Le pas circonférentiel est la distance circonférentielle entre deux alignements de cavités consécutifs, ce pas circonférentiel pouvant être constant ou variable sur la périphérie du pneumatique. La longueur circonférentielle de la périphérie du pneumatique est la longueur développée de la surface de roulement et peut être mesurée sur le pneumatique à l'état neuf, non monté sur jante et non gonflé, à l'aide, par exemple, d'un ruban.

Une période T de la courbe périodique, au plus égale à la longueur circonférentielle L_{C} de l'aire de contact, permet d'avoir au moins un motif, correspondant à une période, dans l'aire de contact, ce qui garantit la propagation, à chaque tour de roue, de la fissure initiée et la limitation de la longueur circonférentielle des morceaux de nervure d'épaule en cas de déchapage.

Enfin, une amplitude A de la courbe périodique, au moins égale à 0.6 fois la largeur axiale L_{S} de la nervure d'épaule, permet le découpage complet de la nervure d'épaule sur toute sa largeur axiale L_{S}. Cela évite en outre la génération d'une bandelette de nervure d'épaule, restant solidaire de la bande de roulement du pneumatique et susceptible de venir frapper la structure de l'avion à chaque tour de roue.

Avantageusement le pas circonférentiel P entre deux cavités consécutives est au moins égal à 2 fois le diamètre D de la surface débouchante d'une cavité. Un pas minimum permet de maîtriser la propagation de la fissure en cas de fissuration sans porter préjudice aux autres performances telles que l'usure et l'adhérence.

Egalement avantageusement le diamètre D de la surface débouchante d'une cavité est au moins égal à 2 mm, de préférence au moins égale à 5 mm. En effet, le diamètre D de la surface débouchante d'une cavité doit être suffisant pour ne pas se refermer sous l'effet du roulage.

Chaque cavité est préférentiellement un cylindre ayant une hauteur radiale H_{C}. Une forme cylindrique de cavité, en raison de l'absence d'arêtes, évite l'initiation de fissure au niveau des cavités, en usage normal.

Encore préférentiellement la hauteur radiale H_{C} de chaque cavité est au plus égale à la hauteur radiale H de la bande de roulement. Cela permet de limiter la propagation de la fissure à la bande roulement, sans atteindre l'armature de sommet, et donc de limiter le déchapage à celui de la nervure d'épaule.

La courbe périodique est avantageusement une ligne brisée, qui est la forme de courbe périodique la plus simple.

Selon un mode de réalisation préféré, dans le cas où la bande de roulement comprend au moins une nervure circonférentielle axialement intérieure, c'est-à-dire axialement intérieure aux deux nervures d'épaule, ladite nervure circonférentielle axialement intérieure s'étendant axialement à partir d'un premier sillon circonférentiel jusqu'à un deuxième sillon circonférentiel, chaque nervure d'épaule comprend des cavités de bord de sillon, débouchant sur la surface de roulement et sur le sillon circonférentiel adjacent à la nervure d'épaule, la au moins une nervure circonférentielle axialement intérieure comprend des cavités de bord de sillon, débouchant sur la surface de roulement et sur chacun des sillons circonférentiels adjacents à la nervure axialement intérieure, les cavités de bord de sillon, formées dans les nervures d'épaule et dans la au moins une nervure circonférentielle axialement intérieure, forment des alignements de cavités, parallèles entre eux et inclinés par rapport à la direction circonférentielle du pneumatique selon un angle au moins égal à 45° et les alignements de cavités sont répartis circonférentiellement sur au moins une partie de la périphérie du pneumatique, selon un pas circonférentiel au moins égal à 0.02 fois et au plus égal à 0.12 fois la longueur circonférentielle de la périphérie du pneumatique.

Ce mode de réalisation est avantageux pour obtenir un fractionnement total de la bande de roulement, c'est-à-dire sur toute sa largeur axiale, lorsqu'un objet contondant, telle qu'une lame, va entailler simultanément les diverses nervures circonférentielles de la bande de roulement. En effet, il combine une distribution de cavités dans chaque nervure d'épaule, garantissant le fractionnement de la nervure d'épaule en cas de fissuration, et des alignements de cavités de bord de sillon, formées dans les bords latéraux des nervures circonférentielles axialement intérieures, garantissant le fractionnement de toute nervure circonférentielle axialement intérieure. Une nervure circonférentielle axialement intérieure peut être soit une nervure intermédiaire, située d'un côté du plan équatorial du pneumatique, soit une nervure centrale, centrée sur le plan équatorial du pneumatique.

Le bord axialement intérieur de chaque nervure d'épaule ainsi que les deux bords de chaque nervure circonférentielle axialement intérieure comprennent des cavités de bord de sillon, formant des alignements inclinés par rapport à la direction circonférentielle du pneumatique selon un angle au moins égal à 45°. L'angle d'inclinaison des alignements de cavités est ainsi plus proche de la direction axiale que de la direction circonférentielle, ce qui est favorable à un mouvement d'ouverture et de fermeture cycliques des cavités, lorsque celles-ci entrent dans l'aire de contact puis en sortent. Ces ouvertures et fermetures cycliques, à chaque tour de roue, favorisent la propagation des fissures.

En outre, les alignements de cavités sont répartis circonférentiellement selon un pas circonférentiel au moins égal à 0.02 fois et au plus égal à 0.12 fois la longueur circonférentielle de la périphérie du pneumatique. Cet intervalle de valeurs du pas circonférentiel est défini en fonction de la longueur circonférentielle maximale recherchée, pour les morceaux de bande de roulement susceptibles de se détacher du pneumatique. En outre le pas circonférentiel maximal, égal à 0.12 fois la longueur circonférentielle de la périphérie du pneumatique, garantit la présence d'au moins une cavité par nervure circonférentielle dans l'aire de contact.

Le phénomène de fissuration d'une nervure circonférentielle axialement intérieure est, selon les inventeurs, différent de celui relatif à une nervure d'épaule. En effet, lors de son passage dans l'aire de contact, une nervure d'épaule est soumise à la fois à une flexion circonférentielle et une flexion axiale, alors qu'une nervure circonférentielle axialement intérieure est soumise principalement à flexion circonférentielle. Lors du passage d'une fissure initiée dans une nervure circonférentielle axialement intérieure dans l'aire de contact avec le sol de la surface de roulement, sous l'action des sollicitations mécaniques cycliques à chaque tour de roue, cette fissure se propage radialement vers l'intérieur du pneumatique jusqu'à la couche de sommet la plus radialement extérieure, puis axialement et circonférentiellement le long de la face radialement extérieure de la couche de sommet la plus radialement extérieure, entraînant le découpage du sommet du pneumatique au niveau de la couche de sommet la plus radialement extérieure. Sous l'effet des sollicitations mécaniques et en particulier des efforts centrifuges, la fissuration va se propager radialement vers l'extérieur du pneumatique à travers la bande de roulement, à divers azimuts du pneumatique. Il en résulte que la portion de bande de roulement ainsi découpée sous forme de morceaux de dimensions plus ou moins importantes, voire la bande de roulement quasiment complète, va se détacher du pneumatique et être projetée vers l'extérieur avec le risque de heurter la structure de l'avion ou de pénétrer dans les moteurs.

Dans le cas d'une bande de roulement classique, c'est-à-dire comprenant uniquement des nervures circonférentielles séparées par des sillons circonférentiels, mais ne comprenant pas d'alignement de cavités tels que définis dans le présent mode de réalisation, les morceaux de bande de roulement peuvent s'étendre axialement sur une portion axiale ou sur toute la largeur axiale de la bande de roulement. Circonférentiellement, les morceaux de bande de roulement peuvent s'étendre sur une grande partie de la périphérie du pneumatique, voire sur toute sa périphérie. Par conséquent, les morceaux de bande de roulement projetés ont des dimensions et des masses pénalisantes susceptibles d'endommager les structures ou les moteurs de l'avion.

Dans le cas d'une bande de roulement comprenant des alignements de cavités, les morceaux de bande de roulement ont des dimensions axiales et circonférentielles plus faibles que dans le cas d'une bande de roulement classique.

En effet, les cavités constituent des zones de découpe préférentielle de la bande de roulement, dans la mesure où elles permettent une diminution locale de l'épaisseur radiale de la bande de roulement. Cette diminution d'épaisseur radiale entraine un effet de charnière lors du passage des cavités en entrée et en sortie de l'aire de contact avec le sol de la surface de roulement. Elle favorise ainsi l'émergence de fissures se propageant radialement vers l'extérieur à partir de la face radialement extérieure de la couche de sommet la plus radialement extérieure. Les sollicitations mécaniques d'ouverture et de fermeture alternées des cavités, lors de leur passage dans l'aire de contact à chaque tour de roue, favorisent la propagation de la fissuration qui, émerge par ailleurs plus rapidement compte tenu de la diminution locale de l'épaisseur radiale de la bande de roulement. En d'autres termes, les cavités constituent des zones d'affaiblissement local favorisant l'émergence des fissures et la découpe de la bande de roulement.

Les alignements de cavités constituent par ailleurs des plans de fissuration préférentielle de la bande roulement, limitant la longueur circonférentielle des morceaux de bande de roulement. Par conséquent, la longueur circonférentielle d'un morceau de bande de roulement ne devrait pas théoriquement excéder la distance circonférentielle ou pas circonférentiel entre deux alignements de cavités consécutifs. Le choix du pas circonférentiel conditionne ainsi la longueur circonférentielle maximale des morceaux de bande de roulement.

La présence de cavités dans une nervure circonférentielle entraine la découpe de ladite nervure circonférentielle, qui peut alors se désolidariser du pneumatique indépendamment des nervures adjacentes. La largeur axiale des morceaux de bande de roulement est ainsi réduite à la largeur axiale de la nervure.

Selon une variante du mode de réalisation préféré précédent, les alignements de cavités sont inclinés par rapport à la direction circonférentielle selon un angle au moins égal à 80°.

Les caractéristiques et autres avantages de l'invention seront mieux compris à l'aide des figures 1 à 4 :
- figure 1 : coupe méridienne du sommet d'un pneumatique pour avion selon l'invention,
- figure 2 : vue en perspective d'une nervure d'épaule selon l'invention,
- figure 3 : aire de contact d'une bande de roulement d'un pneumatique d'avion selon l'invention.
- figure 4 : aire de contact d'une bande de roulement d'un pneumatique d'avion selon un mode de réalisation préféré de l'invention, avec alignement de cavités.

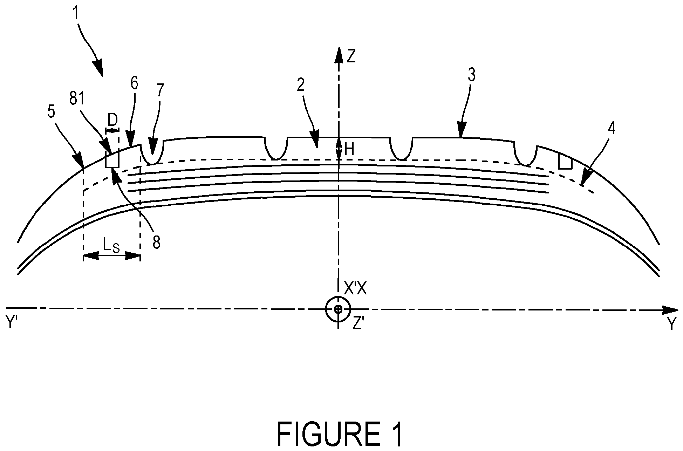

Les figures 1 à 4 ne sont pas représentées à l'échelle mais de façon simplifiée, afin de faciliter la compréhension de l'invention.

La figure 1 présente une coupe méridienne du sommet d'un pneumatique 1 pour avion selon l'invention, c'est-à-dire une coupe dans un plan méridien (YY', ZZ'), où les directions YY' et ZZ' sont les directions respectivement axiale et radiale du pneumatique. La bande de roulement 2, destinée à venir en contact avec un sol par l'intermédiaire de la surface de roulement 3, s'étend radialement depuis la surface de fond 4 jusqu'à la surface de roulement 3 sur une hauteur radiale H, axialement depuis un premier bord jusqu'à un deuxième bord de bande de roulement 5, et circonférentiellement sur toute la périphérie du pneumatique (non représenté). Dans l'exemple représenté, la bande de roulement 2 comprend cinq nervures circonférentielles dont deux nervures circonférentielles axialement extérieures dites nervures d'épaule 6, chacune s'étendant axialement depuis un bord de bande de roulement 5 jusqu'à un sillon circonférentiel 7 sur une largeur axiale L_{S}. Dans chaque nervure d'épaule 6, est représenté en coupe, une cavité 8 de forme cylindrique et débouchant sur la surface de roulement 3 selon une surface débouchante circulaire 81 de diamètre D. En outre, sont représentées l'armature de sommet du pneumatique, constituées de couches de sommet, radialement intérieure à la surface de fond 4 et l'armature de carcasse radialement intérieure à l'armature de sommet.

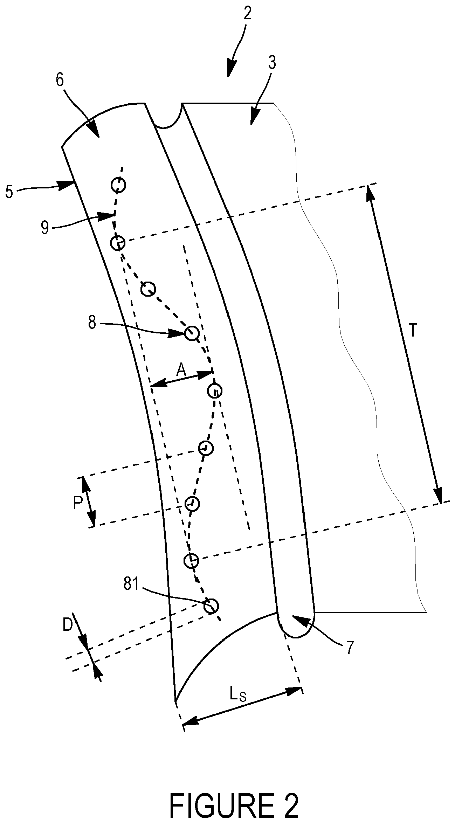

La figure 2 présente une vue en perspective d'une nervure d'épaule 6 selon l'invention. Plus précisément, elle présente une portion d'épaule de bande de roulement 2, comprenant une nervure d'épaule 6, un sillon circonférentiel 7 et une nervure circonférentielle intermédiaire. La nervure d'épaule 6 s'étend axialement depuis un bord de bande de roulement 5 jusqu'au sillon circonférentiel 7 sur une largeur axiale L_{S}. La nervure d'épaule 6 comprend des cavités 8 débouchant sur la surface de roulement 3 en formant une surface débouchante 81 inscrite dans un cercle de diamètre D. Les cavités 8 sont réparties circonférentiellement selon un pas circonférentiel P et positionnées circonférentiellement selon une courbe périodique 9 ayant une période T et une amplitude A.

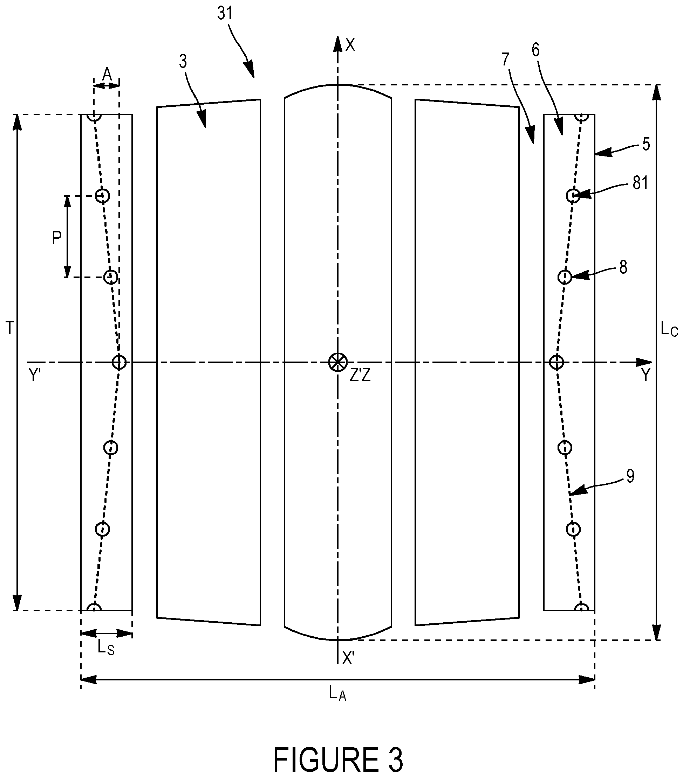

La figure 3 présente une aire de contact (31) d'une bande de roulement d'un pneumatique d'avion selon l'invention, lorsque le pneumatique à l'état neuf, gonflé à sa pression nominale recommandée au sens de la norme TRA, est écrasée sous une charge correspondant à une flèche radiale de 32%. L'aire de contact, inscrite dans un rectangle, est définie par sa longueur circonférentielle L_{C} et sa largeur axiale L_{A}. Dans l'exemple représenté, la nervure d'épaule 6, s'étendant axialement entre le bord 5 de la bande de roulement et le sillon circonférentiel 7 sur une largeur axiale L_{S}, comprend une distribution de cavités 8, débouchant sur la surface de roulement 3 selon des surfaces débouchantes 81 de section circulaire de diamètre D et réparties selon un pas P approximativement égal à 0.1 fois la période T de la courbe périodique. La courbe 9, support des cavités 8, a une période T inférieure à la longueur circonférentielle L_{S} et une amplitude A approximativement égale à 0.5 fois la largeur axiale L_{S} de la nervure d'épaule 6.

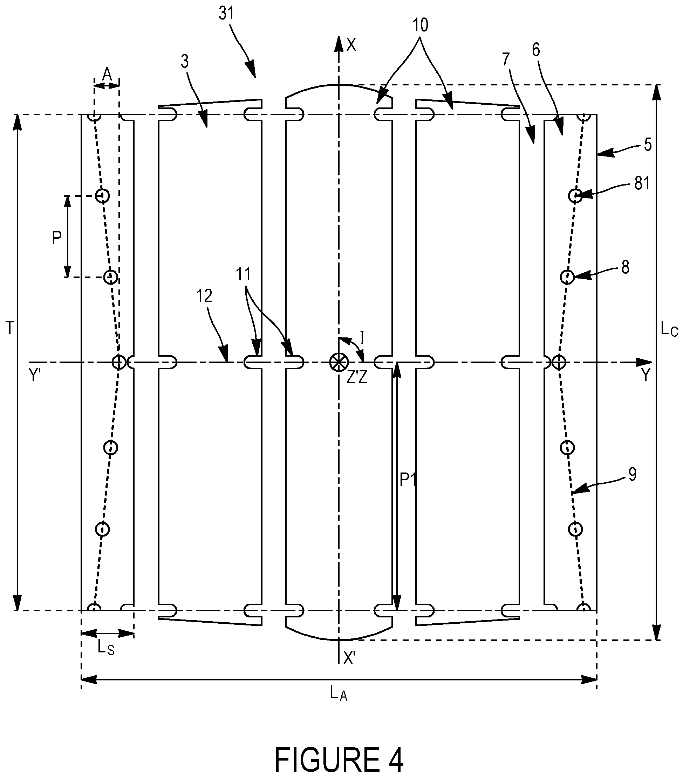

La figure 4 présente une aire de contact 31 d'une bande de roulement d'un pneumatique d'avion selon un mode préféré de réalisation, lorsque le pneumatique à l'état neuf, gonflé à sa pression nominale recommandée au sens de la norme TRA, est écrasée sous une charge correspondant à une flèche radiale de 32%. L'aire de contact, inscrite dans un rectangle, est définie par sa longueur circonférentielle L_{C} et sa largeur axiale L_{A}. Dans l'exemple représenté, chaque nervure d'épaule 6, s'étendant axialement entre le bord 5 de la bande de roulement et le sillon circonférentiel 7 sur une largeur axiale L_{S}, comprend une distribution de cavités 8, débouchant sur la surface de roulement 3 selon des surfaces débouchantes 81 de section circulaire de diamètre D et réparties selon un pas P approximativement égal à 0.1 fois la période T de la courbe périodique. La courbe 9, support des cavités 8, a une période T inférieure à la longueur circonférentielle L_{S} et une amplitude A approximativement égale à 0.5 fois la largeur axiale L_{S} de la nervure d'épaule 6. En outre, la bande de roulement comprend trois nervures circonférentielles axialement intérieures 10, s'étendant axialement à partir d'un premier sillon circonférentiel 7 jusqu'à un deuxième sillon circonférentiel 7: deux nervures intermédiaires, situées de part et d'autre du plan équatorial XZ du pneumatique, et une nervure centrale, centrée sur le plan équatorial XZ du pneumatique. Chacune des deux nervures d'épaule 6 comprend des cavités de bord de sillon 11, débouchant sur la surface de roulement 3 et sur le sillon circonférentiel 7 adjacent à la nervure d'épaule. Chacune des trois nervures circonférentielles axialement intérieures 10 comprend des cavités de bord de sillon 11, débouchant sur la surface de roulement 3 et sur chacun des sillons circonférentiels 7 adjacents à la nervure circonférentielle axialement intérieure. Les cavités de bord de sillon 11, formées dans les deux nervures d'épaule 6 et dans les trois nervures circonférentielles axialement intérieures, forment des alignements de cavités 12, parallèles entre eux et inclinés par rapport à la direction circonférentielle XX' du pneumatique selon un angle I au égal à 90°. Dans le cas présent, les alignements de cavités 12 sont répartis circonférentiellement sur toute la périphérie du pneumatique, selon un pas circonférentiel constant P1 égal à 0.5 fois la longueur circonférentielle L_{C} de l'aire de contact du pneumatique.

Les inventeurs ont réalisé l'invention pour un pneumatique d'avion de dimension 46x17R20, dont l'usage est caractérisé par une pression nominale égale à 15.3 bars, une charge statique nominale égale à 20473 daN et une vitesse de référence maximale de 360 km/h.

Dans le pneumatique étudié, la bande de roulement comprend cinq nervures circonférentielles: 2 nervures d'épaule, 2 nervures intermédiaires et une nervure centrale de largeurs axiales respectives 50 mm, 33.5 mm et 82 mm. Chacune des deux nervures d'épaule comprend des cavités cylindriques débouchant sur la surface de roulement en formant une surface débouchante circulaire ayant un diamètre D égal à 5 mm. Les cavités sont réparties circonférentiellement selon un pas circonférentiel P égal à 25 mm et positionnées circonférentiellement selon une courbe périodique, de type ligne brisée, ayant une période T égale à 145 mm et une amplitude A égale à 30 mm.

Par rapport à un pneumatique de référence, ayant la même bande de roulement mais sans cavités dans les nervures d'épaule, les inventeurs ont mis en évidence, sur des tests de déchapage suite à un endommagement à l'épaule, que la longueur moyenne des morceaux de nervure d'épaule est divisée par 3 par rapport au pneumatique de référence et que leur masse moyenne est divisée par 2.

## Revendications

1. Pneumatique (1) pour avion comprenant :
- une bande de roulement (2), destinée à venir en contact avec un sol par l'intermédiaire d'une surface de roulement (3) selon une aire de contact (31) de longueur circonférentielle L_{C} et de largeur axiale L_{A}, lorsque le pneumatique gonflé à sa pression nominale recommandée est soumis à une flèche radiale égale à 32%,
- la bande de roulement (2) s'étendant radialement depuis une surface de fond (4) jusqu'à la surface de roulement (3) sur une hauteur radiale H, s'étendant axialement depuis un premier bord jusqu'à un deuxième bord de bande de roulement (5), et s'étendant circonférentiellement sur toute la périphérie du pneumatique (1),
- la bande de roulement (2) comprenant deux nervures circonférentielles axialement extérieures dites nervures d'épaule (6), chacune s'étendant axialement depuis un bord de bande de roulement (5) jusqu'à un sillon circonférentiel (7) sur une largeur axiale L_{S}, **caractérisé en ce que** chaque nervure d'épaule (6) comprend des cavités (8) débouchant sur la surface de roulement (3) en formant une surface débouchante (81) inscrite dans un cercle de diamètre D, **en ce que** les cavités (8) de chaque nervure d'épaule (6) sont réparties circonférentiellement selon un pas circonférentiel P, **en ce que** les cavités (8) de chaque nervure d'épaule (6) sont positionnées circonférentiellement selon une courbe périodique (9) ayant une période T et une amplitude A, **en ce que** le pas circonférentiel P entre deux cavités (8) consécutives est au plus égal à 0.2 fois la période T de la courbe périodique (9), **en ce que** la période T de la courbe périodique (9) est au plus égale à la longueur circonférentielle L_{C} de l'aire de contact (31) **et en ce que** l'amplitude A de la courbe périodique (9) est au moins égale à 0.5 fois la largeur axiale L_{S} de la nervure d'épaule (6).

2. Pneumatique (1) pour avion selon la revendication 1, **dans lequel** le pas circonférentiel P entre deux cavités (8) consécutives est au moins égal à 2 fois le diamètre D de la surface débouchante (81) d'une cavité (8).

3. Pneumatique (1) pour avion selon l'une quelconque des revendications 1 ou 2, **dans lequel** le diamètre D de la surface débouchante (81) d'une cavité (8) est au moins égal à 2 mm, de préférence au moins égale à 5 mm.

4. Pneumatique (1) pour avion selon l'une quelconque des revendications 1 à 3, **dans lequel** chaque cavité (8) est un cylindre ayant une hauteur radiale H_{C}.

5. Pneumatique (1) pour avion selon la revendication 4, **dans lequel** la hauteur radiale H_{C} de chaque cavité (8) est au plus égale à la hauteur radiale H de la bande de roulement (2).

6. Pneumatique (1) pour avion selon l'une quelconque des revendications 1 à 5, **dans lequel** la courbe périodique (9) est une ligne brisée.

7. Pneumatique pour avion selon l'une quelconque des revendications 1 à 6, la bande de roulement comprenant au moins une nervure circonférentielle axialement intérieure (10), s'étendant axialement à partir d'un premier sillon circonférentiel (7) jusqu'à un deuxième sillon circonférentiel (7), **dans lequel** chaque nervure d'épaule (6) comprend des cavités de bord de sillon (11), débouchant sur la surface de roulement (3) et sur le sillon circonférentiel (7) adjacent à la nervure d'épaule, **dans lequel** la au moins une nervure circonférentielle axialement intérieure (10) comprend des cavités de bord de sillon (11), débouchant sur la surface de roulement (3) et sur chacun des sillons circonférentiels (7) adjacents à la nervure axialement intérieure, **dans lequel** les cavités de bord de sillon (11), formées dans les nervures d'épaule (6) et dans la au moins une nervure circonférentielle axialement intérieure (10), forment des alignements de cavités (12), parallèles entre eux et inclinés par rapport à la direction circonférentielle (XX') du pneumatique (1) selon un angle (I) au moins égal à 45° **et dans lequel** les alignements de cavités (12) sont répartis circonférentiellement sur au moins une partie de la périphérie du pneumatique (1), selon un pas circonférentiel P1 au moins égal à 0.02 fois et au plus égal à 0.12 fois la longueur circonférentielle de la périphérie du pneumatique (1).

8. Pneumatique pour avion selon la revendication 7, **dans lequel** les alignements de cavités (12) sont inclinés par rapport à la direction circonférentielle (XX') selon un angle (I) au moins égal à 80°.

## Patentansprüche

1. Reifen (1) für ein Flugzeug, umfassend:
- ein Reifenprofil (2), das dazu bestimmt ist, über eine Lauffläche (3) gemäß einem Kontaktbereich (31) mit einer Umfangslänge L_{c} und einer axialen Breite L_{A} mit einem Boden in Kontakt zu kommen, wenn der auf seinen empfohlenen Nenndruck aufgepumpte Reifen einer radialen Durchbiegung von gleich 32 % unterworfen ist,
- wobei sich das Reifenprofil (2) über eine radiale Höhe H radial ausgehend von einer Bodenfläche (4) bis zu der Lauffläche (3) erstreckt, wobei es sich axial von einem ersten Rand bis zu einem zweiten Rand des Reifenprofils (5) erstreckt, und wobei es sich in Umfangsrichtung über den gesamten Umkreis des Reifens (1) erstreckt,
- wobei das Reifenprofil (2) zwei axial äußere Umfangsrippen, genannt Schulterrippen (6), umfasst, die sich jeweils axial ausgehend von einem Rand des Reifenprofil (5) über eine axiale Breite Lₛ bis zu einer Umfangsnut (7) erstrecken, **dadurch gekennzeichnet, dass** jede Schulterrippe (6) Hohlräume (8) umfasst, die an der Lauffläche (3) münden, indem sie eine Mündungsfläche (81) bilden, die in einen Kreis mit dem Durchmesser D eingeschrieben ist, dass die Hohlräume (8) jeder Schulterrippe (6) in Umfangsrichtung gemäß einem Umfangsabstand P verteilt sind, dass die Hohlräume (8) jeder Schulterrippe (6) in Umfangsrichtung gemäß einer periodischen Kurve (9) positioniert sind, die eine Periode T und eine Amplitude A aufweist, dass der Umfangsabstand P zwischen zwei aufeinanderfolgenden Hohlräumen (8) höchstens gleich dem 0,2-Fachen der Periode T der periodischen Kurve (9) ist, dass die Periode T der periodischen Kurve (9) höchstens gleich der Umfangslänge L_{c} des Kontaktbereichs (31) ist und dass die Amplitude A der periodischen Kurve (9) wenigstens gleich dem 0,5-Fachen der axialen Breite Lₛ der Schulterrippe (6) ist.

2. Reifen (1) für ein Flugzeug nach Anspruch 1, wobei der Umfangsabstand P zwischen zwei aufeinanderfolgenden Hohlräumen (8) wenigstens gleich dem 2-Fachen des Durchmessers D der Mündungsfläche (81) eines Hohlraums (8) ist.

3. Reifen (1) für ein Flugzeug nach einem der Ansprüche 1 oder 2, wobei der Durchmesser D der Mündungsfläche (81) eines Hohlraums (8) wenigstens gleich 2 mm, vorzugsweise wenigstens gleich 5 mm ist.

4. Reifen (1) für ein Flugzeug nach einem der Ansprüche 1 bis 3, wobei jeder Hohlraum (8) ein Zylinder mit einer radialen Höhe H_{c} ist.

5. Reifen (1) für ein Flugzeug nach Anspruch 4, wobei die radiale Höhe H_{c} jedes Hohlraums (8) höchstens gleich der radialen Höhe H des Reifenprofils (2) ist.

6. Reifen (1) für ein Flugzeug nach einem der Ansprüche 1 bis 5, wobei die periodische Kurve (9) eine gebrochene Linie ist.

7. Reifen für ein Flugzeug nach einem der Ansprüche 1 bis 6, wobei das Reifenprofil wenigstens eine axial innere Umfangsrippe (10) umfasst, die sich axial ausgehend von einer ersten Umfangsnut (7) bis zu einer zweiten Umfangsnut (7) erstreckt, wobei jede Schulterrippe (6) des Nutrandhohlräume (11) umfasst, die in der Lauffläche (3) und in der Umfangsnut (7) münden, die zu der Schulterrippe benachbart ist, wobei die wenigstens eine axial innere Umfangsrippe (10) Nutrandhohlräume (11) umfasst, die in der Lauffläche (3) und in jeder der Umfangsnuten (7) münden, die zu der axial inneren Rippe benachbart ist, wobei die Nutrandhohlräume (11), die in den Schulterrippen (6) und in der wenigstens einen axial inneren Umfangsrippe (10) gebildet sind, Fluchten von Hohlräumen (12) bilden, die parallel zueinander und in Bezug auf die Umfangsrichtung (XX') des Reifens (1) mit einem Winkel (I) von wenigstens gleich 45° geneigt sind und wobei die Fluchten von Hohlräumen (12) in Umfangsrichtung über wenigstens einen Teil des Umkreises des Reifens (1) gemäß einem Umfangsabstand P1 verteilt sind, der wenigstens gleich dem 0,02-Fachen und höchstens gleich dem 0,12-Fachen der Umfangslänge des Umkreises des Reifens (1) ist.

8. Reifen für ein Flugzeug nach Anspruch 7, wobei die Fluchten von Hohlräumen (12) in Bezug auf die Umfangsrichtung (XX') mit einem Winkel (I) von wenigstens gleich 80° geneigt sind.

## Claims

1. Tyre (1) for an aeroplane, comprising:
- a tread (2) intended to come into contact with the ground via a tread surface (3) over a contact patch (31) of circumferential length L_{C} and axial width L_{A} when the tyre inflated to its recommended nominal pressure is subjected to a radial deflection equal to 32%,
- the tread (2) extending radially from a bottom surface (4) to the tread surface (3) over a radial height H, extending axially from a first tread edge to a second tread edge (5), and extending circumferentially around the entire periphery of the tyre (1),
- the tread (2) comprising two axially external circumferential ribs referred to as shoulder ribs (6), each extending axially from a tread edge (5) to a circumferential groove (7) over an axial width L_{S},
**characterized in that** each shoulder rib (6) comprises cavities (8) that open onto the tread surface (3), forming an opening surface (81) inscribed in a circle of diameter D, **in that** the cavities (8) of each shoulder rib (6) are distributed circumferentially at a circumferential spacing P, **in that** the cavities (8) of each shoulder rib (6) are positioned circumferentially along a periodic curve (9) having a period T and an amplitude A, **in that** the circumferential spacing P between two consecutive cavities (8) is at most equal to 0.2 times the period T of the periodic curve (9), **in that** the period T of the periodic curve (9) is at most equal to the circumferential length L_{C} of the contact patch (31) **and in that** the amplitude A of the periodic curve (9) is at most equal to 0.5 times the axial width L_{S} of the shoulder rib (6).

2. Aeroplane tyre (1) according to Claim 1, **wherein** the circumferential spacing P between two consecutive cavities (8) is at least equal to twice the diameter D of the opening surface (81) of a cavity (8).

3. Aeroplane tyre (1) according to either one of Claims 1 and 2, **wherein** the diameter D of the opening surface (81) of a cavity (8) is at least equal to 2 mm, preferably at least equal to 5 mm.

4. Aeroplane tyre (1) according to any one of Claims 1 to 3, **wherein** each cavity (8) is a cylinder having a radial height H_{C}.

5. Aeroplane tyre (1) according to Claim 4, **wherein** the radial height H_{C} of each cavity (8) is at most equal to the radial height H of the tread (2).

6. Aeroplane tyre (1) according to any one of Claims 1 to 5, **wherein** the periodic curve (9) is a broken line.

7. Aeroplane tyre according to any one of Claims 1 to 6, the tread comprising at least one axially internal circumferential rib (10) extending axially from a first circumferential groove (7) to a second circumferential groove (7), **wherein** each shoulder rib (6) comprises groove-edge cavities (11) that open onto the tread surface (3) and onto the circumferential groove (7) adjacent to the shoulder rib, **wherein** the at least one axially internal circumferential rib (10) comprises groove-edge cavities (11) that open onto the tread surface (3) and onto each of the circumferential grooves (7) adjacent to the axially internal rib, **wherein** the groove-edge cavities (11) formed in the shoulder ribs (6) and in the at least one axially internal circumferential rib (10) form mutually parallel rows (12) of cavities that are inclined at an angle (I) at least equal to 45° with respect to the circumferential direction (XX') of the tyre (1), **and wherein** the rows (12) of cavities are distributed circumferentially around at least a part of the periphery of the tyre (1) at a circumferential spacing P1 at least equal to 0.02 times and at most equal to 0.12 times the circumferential length of the periphery of the tyre (1).

8. Aeroplane tyre according to Claim 7, **wherein** the rows (12) of cavities are inclined at an angle (I) at least equal to 80° with respect to the circumferential direction (XX').
